# EUROPEAN PATENT SPECIFICATION

(11) **EP 0 683 444 B1**
(45) Date of publication and mention of the grant of the patent: **29.09.1999**
(21) Application number: 95107327.9
(22) Date of filing: 15.05.1995
(51) Int. Cl.: G05D 16/06, F16K 43/00, F16K 17/04

(54) **Double gas pressure regulator**
Doppelter Gasdruckregler
Régulateur de pression de gaz double

(30) Priority: 18.05.1994 IT VI940075
(43) Date of publication of application: 22.11.1995
(73) Proprietor: PIETRO FIORENTINI SPA, 20124 Milano (MI) (IT)
(72) Inventor: Imboccioli, Claudio, I-36051 Creazzo (VI) (IT)
(74) Representative: Bonini, Ercole

(56) References cited:
- EP-A- 0 522 434
- FR-A- 1 164 864
- FR-A- 1 562 104
- GB-A- 2 231 174
- US-A- 1 729 819

## Description

The invention concerns an improved gas pressure regulator, particularly suited to be used in systems for the distribution of natural gas.

In the installations belonging to the known technique, the lines to reduce the gas pressure comprise a main regulator which keeps the gas at a pre-set controlled pressure and a safety regulator, currently called "monitor", the purpose of which is to intervene in order to ensure the delivery should the main regulator fail to work.

The safety regulations also foresee the installation of a cut-off valve, which intervenes by interrupting the delivery of gas, whenever both the main regulator and the safety regulator fail to work.

According to one embodiment the safety regulator and the cut-off valve which are installed upstream the main regulator, are usually equipped each with a valve body and are applied in line with the same pipe system to which the main regulator is applied.

According to a different embodiment the main regulator and the safety regulator can be assembled on the same valve body, while the cut-off valve is separate and equipped with its own independent valve body also installed in line with the same pipe system on which the valve body receiving both the main regulator and the safety regulator is installed. Finally, in other embodiments, it is the safety regulator and the cut-off valve which are installed on the same valve body which is arranged above the main regulator which, in this case, is equipped with its own valve body.

FR-A-1562104 discloses a gas pressure regulator having a single body including two valve mechanisms one working as main regulator, the second working as safety valve. Also EP-A-0522434 discloses a gas pressure regulator with a single body and with two valve mechanisms. But no prior art discloses a gas pressure regulator including in a single body a main regulator, a safety regulator and a cut-off valve and in which said three valve mechanisms are co-axial each-other.

In conclusion, it is understood that in the embodiments belonging to the known technique the line to reduce the pressure includes a minimum of two valve bodies, each of them being able to receive a maximum of two regulators or one regulator and the cut-off valve.

It is evident that this fact entails an increase in dimensions, since it is necessary to install at least two valve bodies on the same pipe system which cause an increase in the volume occupied by the installation.

As a consequence, the mentioned larger dimensions of the installations have in general a higher impact on the environment which is particularly negative when said installations occur in historical centres or in natural environments where landscape characterizations are important. Besides, the presence of more valve bodies also implies higher costs both for the construction of the system and for its installation since a bigger area is occupied.

It is evident that with the presence of more valve bodies, gas leakages are also most likely to occur and this implies, therefore, higher maintenance costs.

With the purpose of overcoming the above mentioned inconveniences some pressure regulators are realized, which are equipped with a single body to which a control head of a main regulator, a control head of a safety regulator and an activating unit of a cut-off valve are connected, said control heads and said activating unit co-operating with adjusting and/or intercepting mechanisms connected with a single annular opening belonging to said single body and communicating, at one end with a way to inlet the gas at high pressure and at the other end with a way to deliver the gas at an adjusted pressure.

The pressure regulators of the described type solve the mentioned problems but they, too, present some inconveniences.

A first inconvenience is that the body of the regulator acquires a five-way configuration, subdivided as follows:
- a way for the inlet of the gas at a high pressure;
- a way for the connection to the cut-off valve;
- a way for the connection to the safety regulator;
- a way for the connection to the main regulator;
- a way to deliver the gas at an adjusted pressure;
which makes the construction rather complex.

Another inconvenience is that the presence in the same body of a such a high number of ways, makes the casting which forms the body less reliable as far as both the inner and the outer seal are concerned and it also makes more costly the finishing opeations with the machine tools after the casting operation.

It is with the purpose of overcoming even such inconveniences, that the present invention is disclosed.

In particular, the main purpose of the present invention is to realize an improved gas pressure regulator consisting of a single body wherein said body is of a simplier construction, as compared with the pressure regulators equivalent to it.

It is another purpose for said pressure regulator to be also more reliable from the safety point of view, as compared with the known regulators equivalent to it.

It is a further purpose for said body of said pressure regulator according to the invention to require a less costly casting and also less operations with machine tools than those required by the body of a pressure regulator of the known type equivalent to it.

The described purposes are achieved by realizing a pressure regulator for compressed gas connected with a pipe system delivering gas under pressure the main features of which are according to claim 1.

According to one preferred embodiment, said adjusting and/or intercepting mechanisms consist of tubular elements driven into motion the control heads of said regulators and by the activating unit of said cut-off valve, wherein said tubular elements adjust and/or interrupt the transit of the gas through the regulator-body ways to let in and to deliver the gas, co-operating with said annular opening of said body of the regulator.

Said annular opening consists of an annular valve applied to the body of the regulator, which is equipped with sealing rings separate and independent from one another, each of them co-operating with one of said adjusting and/or intercepting mechanisms.

With regard to said tubular elements which form the adjusting and/or intercepting mechanisms of the regulators, these are co-axial with one another and with the annular opening, in relation to which they are arranged on opposite sides.

The tubular element which forms the intercepting mechanism of the cut-off valve is arranged co-axial outside the tubular element of the safety regulator and presents on its outer surface a protruding ring which elastically contrasts against a spring which, in case of failure of both the main regulator and the safety regulator, pushes said tubular element and thereby automatically causes the annular opening to close.

A movable contrasting element co-operates with said protruding ring and keeps it in the open position while the installation is in operation and it allows its manual resetting by rotating a handle after each interruption.

Advantageously, said tubular element which forms the intercepting mechanism of said cut-off valve presents an essentially symmetrical outer profile which counter balances the stress exerted on it by the pressure of the gas thus avoiding excessive pressures against the sealing ring when said tubular element is the in closed position.

This essentially symmetrical shape limits the efforts required for the resetting, even in the presence of a high pressure variation.

Also advantageously, the use of a simplified body equipped with a smaller number of ways in which to install the main regulator, the safety regulator and the cut-off valve, permits to reduce to the utmost the charge losses which occur outside the pressure regulator itself and, therefore, to have pressure reducing units which can operate with very small pressure differences between gas intake and gas outlet.

Further scope of applicability of the present invention will become apparent from the detailed description given hereinafter. However, it should be understood that the detailed description and specific example, while indicating a preferred embodiment of the invention, are given by way of illustration only, since various changes and modifications within the spirit and scope of the invention will become apparent to those skilled in the art from this detailed description and from the drawings, wherein:
- Fig. 1 shows in an axonometric view the pressure regulator according to the invention complete with a main regulator, a safety regulator, a cut-off valve and feeding devices of the regulators;
- Fig. 2 shows the enlarged detail of the body of the pressure regulator with the intercepting mechanisms arranged in the position they acquire during the operation;
- Fig. 3 shows the plan view of the body of Fig. 2;

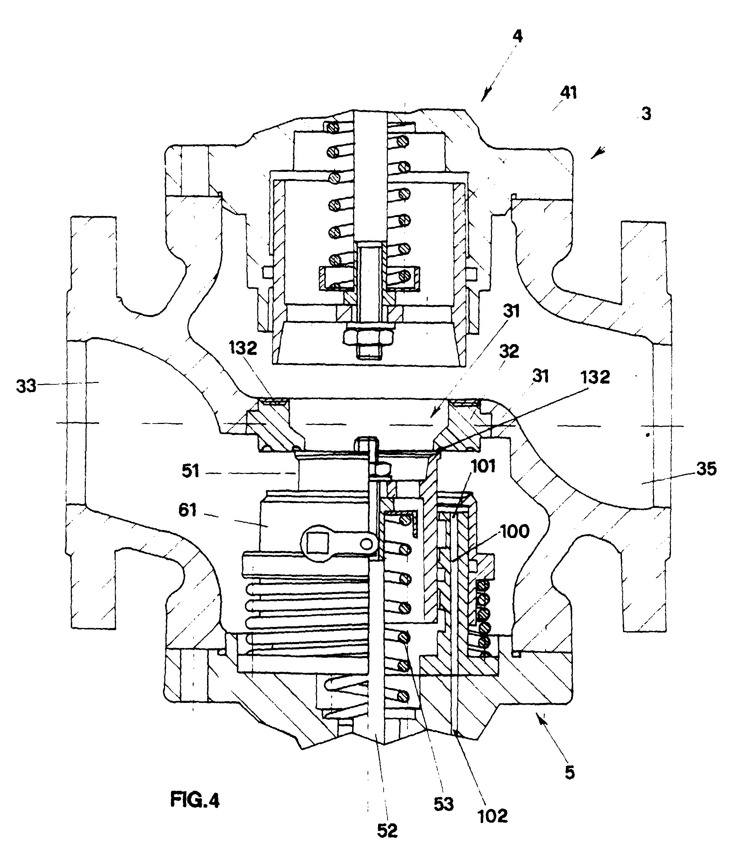

- Fig. 4 shows the body of the regulator in a cutaway representation and with the annular opening in the closed position because of the intervention of the adjusting mechanism of the safety regulator;
- Fig. 5 shows the body of the regulator with the annular opening in the closed position because of the intervention of the interecepting mechanism of the cut-off valve;
- Fig. 6 shows the plan view of the body of the regulator represented in Fig. 5;
- Fig. 7 shows a front view of the activating device of the cut-off valve.

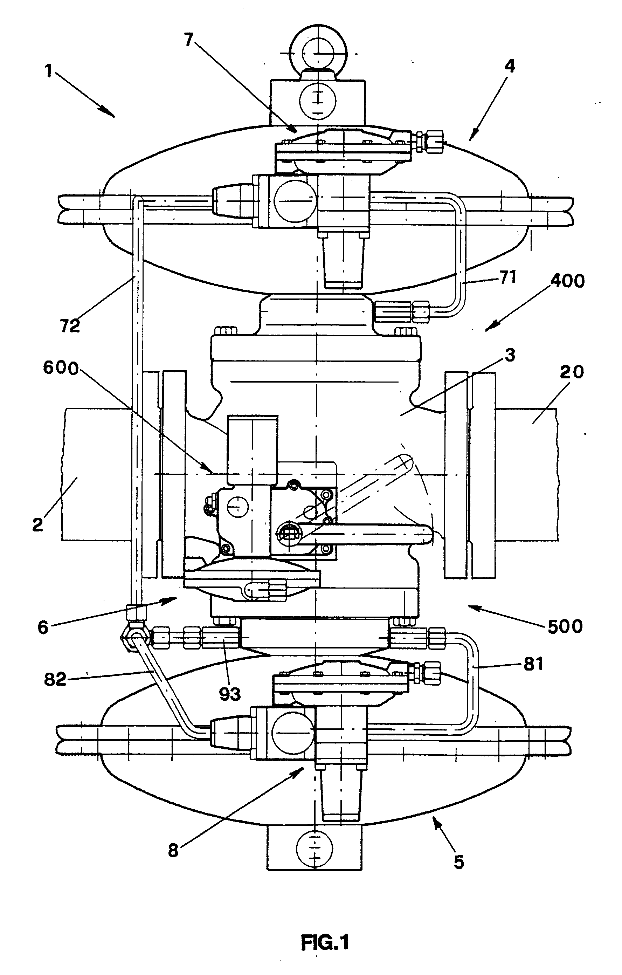

As can be observed in Fig. 1, the pressure regulator according to the invention, indicated as a whole with 1, is connected with a pipe system 2 for the inlet of gas under pressure and comprises a single body 3 to which the following are mechanically connected:
- a control head 4 which, by co-operating with said single body 3, defines a main regulator, indicated as a whole with 400;
- a further control head 5 which, by co-operating with said single body 3, defines a safety regulator 500;
- an activating unit 6 which, by co-operating with said single body 3, defines a cut-off valve, indicated as a whole with 600;
- a pair of devices 7 and 8, commonly called "pilots", each of them being suited to activate one of said heads 4 and 5 to which they are connected by means of pipe systems 71 and 81.

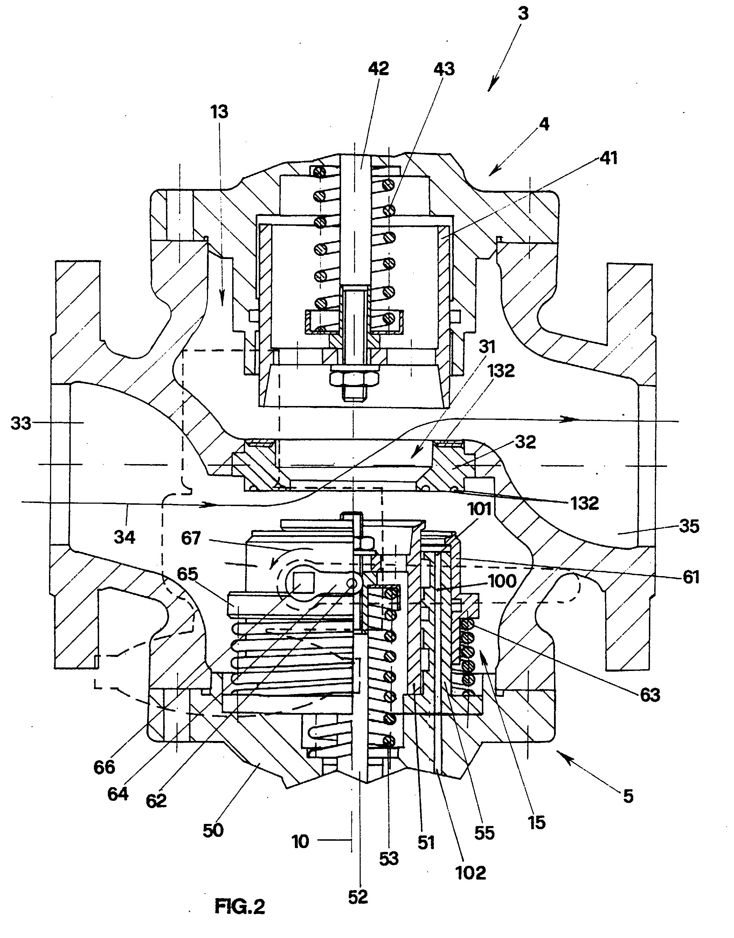

It can be observed that both said devices 7 and 8 are supplied through a duct 100, visible in Fig. 2, obtained in the guiding sleeve 55, which is essentially cylindrical and is arranged outside a second tubular element 51 belonging to said safety regulator 500 and inside a third tubular element 61 belonging to said cut-off valve 600. In particular, such a duct 100 presents the inlet 101 communicating with the inlet way 33 of the regulator and the outlet 102 connected through a sleeve 93 visible in Fig. 1, with two pipe systems 71 and 81 which feed the gas to said devices 7 and 8.

It is important to enable the pilots 7 and 8, which adjust the operation of the main regulator 400 and of the safety regulator 500 to work and, therefore, to ensure that they are fed by the energy coming from the gas when the cut-off valve 600 is open. On the contrary, said pilots must be excluded from the gas supply, therefore, they should not work when the cut-off valve 600 is closed.

It is evident that the described connections of the devices to the regulators are liable to be modified following different embodiments.

In particular, in Fig. 2 it can be observed that the body 3 of said regulator presents an inlet way 33, a delivery way 35 and, inside, a single annular opening 31 defined by the annular valve seat 32 applied to the body of the regulator itself. Said valve seat can consist of a single piece or of several pieces.

In said valve seat there are also three sealing rings 132, which are independent and separate from one another, each of them co-operating with one of the intercepting and/or adjusting mechansims which form the regulator and which consist of a first tubular element 41 belonging to said main regulator 400, of the already mentioned second tubular element 51 belonging to said safety regulator 500 and counterposed to said first tubular element 41 and finally, of the already mentioned third tubular element 61 belonging to the cut-off valve 600.

All of said tubular elements are co-axial with one another and, in particular, said first tubular element 41 is coupled with the body 3 of the regulator in correspondence with a first service way 13, while said second tubular element 51 and said third tubular element 61 are coupled with the same body 3 of the regulator in correspondence with a second service way 15.

Therefore, the body 3 of the regulator consists of four ways and precisely, of an inlet way 33, of a delivery way 35, of a first service way 13 and of a second service way 15.

Moreover, said tubular elements are each equipped with a shaped annular rim suited to create a sealing effect by matching one of the already mentioned sealing rings 132 arranged on the valve seat 32.

It can also be observed that said first tubular element 41 is connected with the control head 4 of said main regulator 400 through first mechanical means which comprise a first stem 42 and an elastic means suited to make flexible the movement of said first stem 42, which consists of a spring 43, co-axially arranged outside said first stem 42.

Similarly, said second tubular element 51 co-operates with the control head 5 of said safety regulator 500 through second mechanical means which comprise a second stem 52 and an elastic means suited to make flexible the movement of said second stem 52 and consisting of a spring 53 coaxially arranged outside said second stem 52.

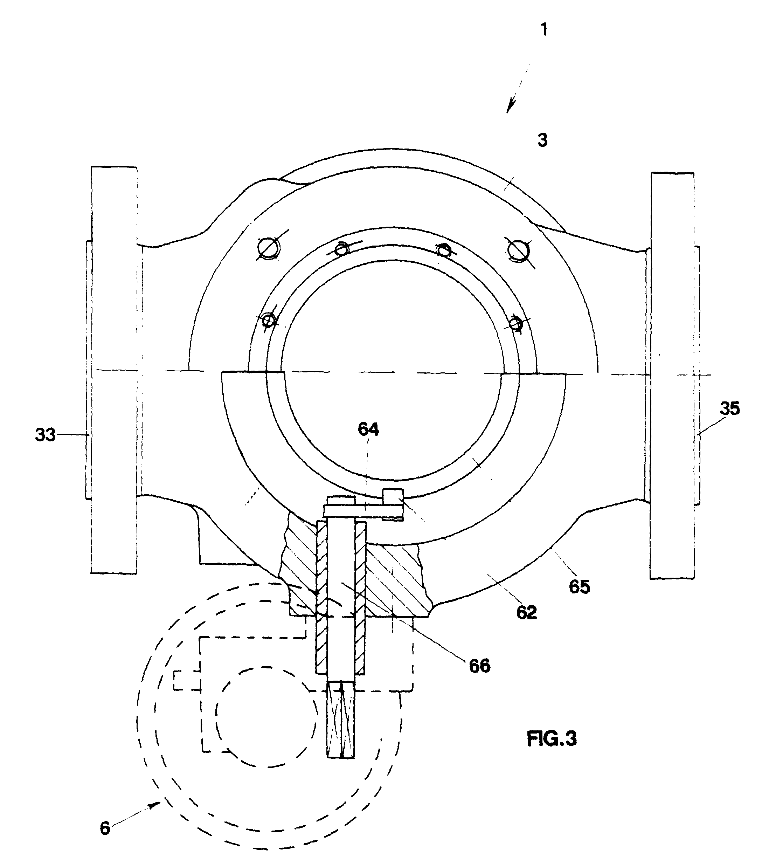

Finally, said third tubular element 61 co-operates with the activating unit 6 of said cut-off valve 600 through a pivot pin 66 which presents, at one end, a link rod 64 equipped with a movable contrasting element consisting of a peg 62 which interferes against a ring 65 which is protruding in relation to the lateral outer surface of said third tubular element 61, as can be observed in better detail in the Figs. 2 and 3.

Moreover, said third tubular element 61 is also equipped with a third elastic means consisting of a spring 63 suited to make flexible its movement when the tubular element 61 slides along the direction of the axis 10 of the pressure regulator.

It can also be observed that said third tubular element 61 is co-axially arranged outside said second tubular element 51 and, between the two there is a guiding sleeve 55 which is attached to the flange 50 of the control head 5 of the safety regulator 500. The duct 100 which, as it has already been said, feeds said "pilots" 7 and 8 is obtained within said guiding sleeve 55.

In the working condition, the pressure regulator and its inner mechanisms are positioned as represented in Fig. 2, wherein it can be observed that the gas under pressure which enters into the regulator through the intlet way 33, goes through its body 3 following direction 34, crosses the annular opening 31 and flows out through the delivery way 35, since the intercepting mechanisms of the main regulator 400 and of the safety regulator 500 are arranged in the open position.

Infact, whenever the device 7 connected to the head 4 of the main regulator 400 detects a pressure which is lower than its set value after the pipe system 2 and, as a consequence, after the delivery way 35, it keeps its first tubular element 41 in the open position.

The device 8 connected to the head 5 of the safety regulator 500 operates likewise by keeping open the second tubular element 51, since said device 8 is set at a pressure which is slightly higher than the set pressure of the device 7 connected to the head 4 of the main pressure regulator 400.

The third tubular element 61 is also in the open position, since the peg 62 of the movable contrasting element co-operating with the activating unit 6 of the cut-off valve 600 keeps the third tubular element 61 away from the valve seat 32 of the annular opening 31, since its set pressure is higher than the set pressure of the device 8 connected to the control head 5 of the safety regulator 500.

Whenever the pressure after the delivery way 35 reaches a higher value than the set value of the device 7 connected to the head 4 of the main regulator 400, because of a working failure in the pressure regulator, the control head 5 of the safety regulator 500 intervenes. This pushes the second stem 52 and sends the second tubular element 51 against the sealing ring 132 of the valve seat 32, thus acquiring an adjusting position which is optimum to ensure the decrease of the outlet pressure.

If after the delivery way 35 there is a further increase in pressure exceeding the set value of the control device 8 of the head 5 of the safety regulator 500, this means that the safety regulator has failed to work too and, therefore, once the pressure value corresponding to the set value of the cut-off valve 600 has been reached, the latter forces the pivot pin 66 by means of its activating unit 6 to perform an anti-clockwise rotation following direction 67, as represented in Fig. 2.

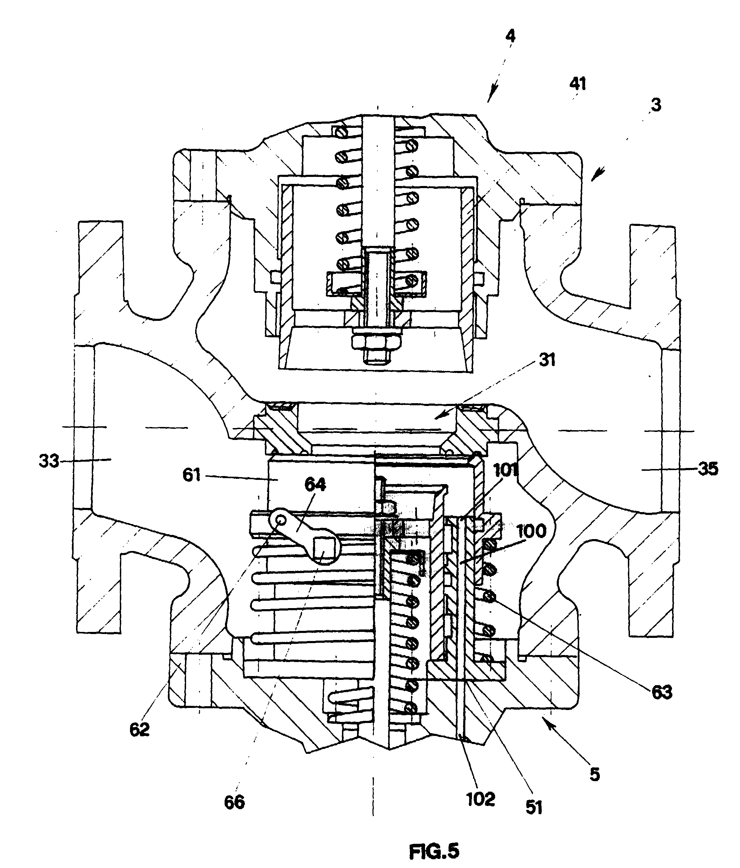

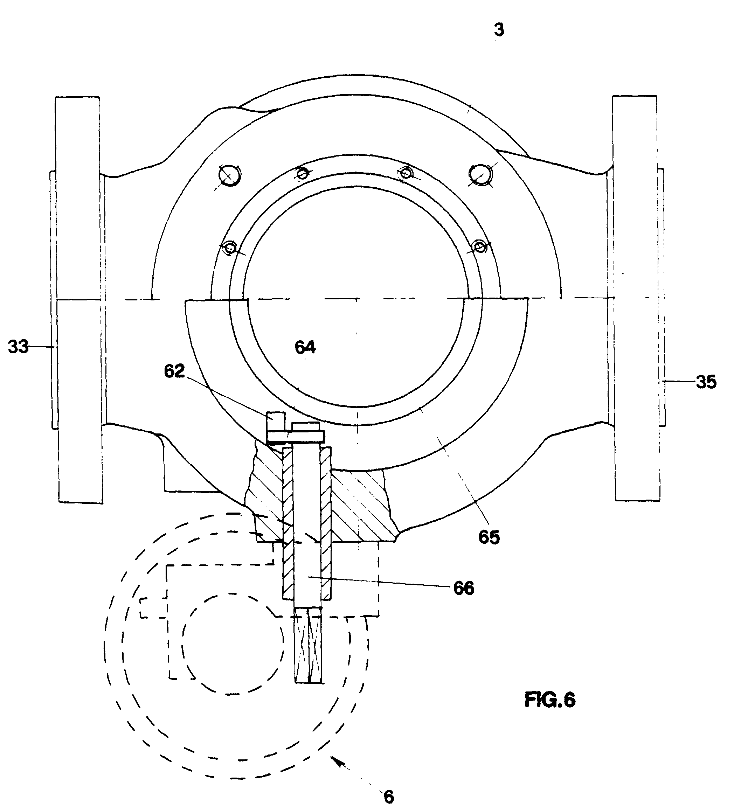

This fact causes the release of the peg 62 from the protruding ring 65 obtained in the outer lateral surface of said third tubular element 61 which, as can be observed in Fig. 6, since it is no longer held back is pushed against its sealing ring 132 because of the pressure exerted by the spring 63, thus closing the annular opening 31, as can be observed in Fig. 5.

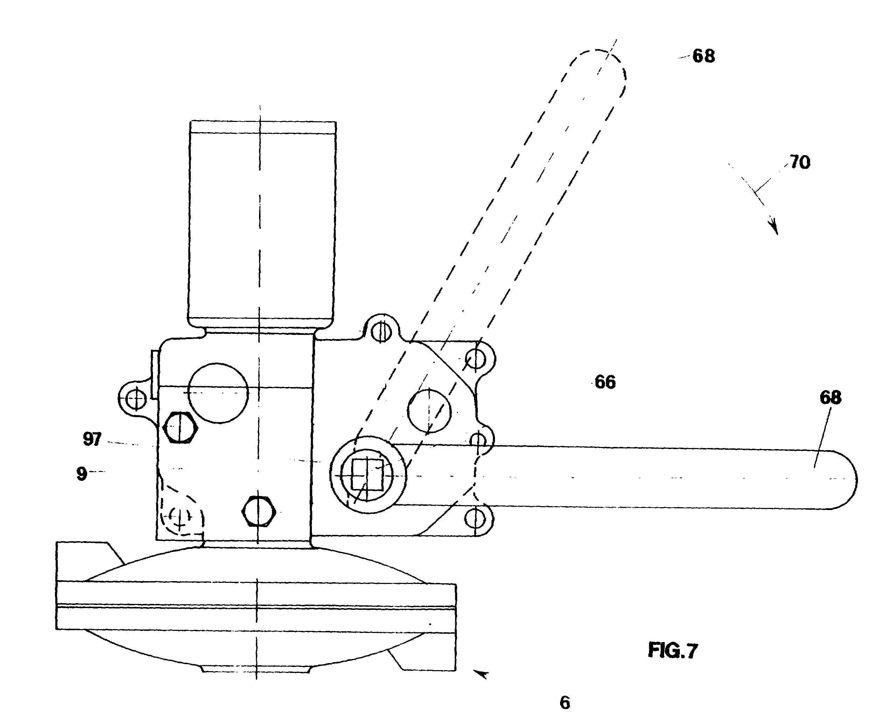

The intervention of the cut-off valve 6 causes the displacement of the lever 68 attached to the pivot pin 66, so as to place it in the position represented with a dotted line in Fig. 7. This fact permits to see that the cut-off valve is in its closed position and, therefore, that the gas no longer flows from the inlet way 33 to the delivery way 35.

In addition, with the intercepting mechanism 61 of the cut-off valve in its closed position, the duct 100 is no longer fed by the gas coming from the inlet way 33. In such a situation, the devices 7 and 8 activating the control heads 4 and 5 are no longer supplied with gas at a high pressure and, therefore, they lack the motive power necessary to activate the main regulator 400 and the safety regulator 500.

Therefore, both the danger that the discharge of said devices, which are connected with the pipe system 20 after the pressure regulator, can feed apparatus even after the intervention of the cut-off valve and the danger that said devices, which are no longer supplied with gas, may still activate the heads to which they are connected, are avoided.

In order to resume the operation of both the main pressure regulator and the safety pressure regulator it is necessary to manually intervene by applying to the control rod 68 a clockwise rotation 70 so as to bring it back into the position represented in Fig. 7. In this position the intercepting mechanism 61 acquires again the open position and through the duct 100 the supply of gas to the devices 7 and 8 is resumed.

In such conditions the main pressure regulator and the safety regulator can restart.

On the basis of what has been described, it is understood that the regulator according to the invention reaches the proposed purposes.

Infact, since the tubular elements which form the adjusting and/or intercepting mechanisms are arranged co-axial with one another and, in particular, since the tubular element which forms the intercepting mechanism of the cut-off valve is co-axially arranged outside the tubular element of the safety regulator, it is possible to construct a four-way regulator body. Therefore, the body of the regulator presents a simplier construction, as compared with the body of similar regulators of the known type.

Moreover, such a body of the regulator requires less finishing hing operations with the machine tools and is, therefore, less costly to manufacture as a whole.

The use of the regulator according to the invention consisting of a four-way body, obviously achieves also the purpose of obtaining all the advantages of the single-body regulators of the known type.

It is evident that the pressure regulator according to the invention may undergo modifications, consisting of different types of control heads, different types of devices for the inlet of gas to said heads, or of different dimensions, all falling within the spirit and scope of the present invention.

## Claims

1. A pressure regulator (1) for compressed gas connected with a pipe system (2) delivering gas under pressure and comprising a single body (3) to which the following are mechanically connected:
- a control head (4) of a main regulator (400) including a main adjusting valve mechanism (41);
- a control head (5) of a safety regulator (500) including a safety adjusting valve mechanism (51);
- a pair of devices (7, 8) supplied with gas under pressure, each of said devices being suited to activate one of said heads (4, 5) to which it is connected by means of a respective pipe (71, 81);
- a unit (6) activating a cut-off valve (600) including an intercepting cut-off valve mechanism (61), characterized in that said three valve mechanisms (41; 51; 61) are separated from one another and cooperate with a single annular opening (31) which belongs to said single body (3) and which communicates at one end, with a way (33) for the inlet of gas at a high pressure, and at the other end, with a way (35) to deliver the same gas at an adjusted pressure, said three valve mechanisms being co-axial with each other.

2. A pressure regulator according to claim 1, characterized in that between said safety adjusting valve mechanism (51) and said intercepting cut-off valve mechanism (61) there is a guiding sleeve (55) belonging to said safety regulator (500), within whose body a longitudinal duct (100) is obtained, which presents one of its ends communicating with said inlet way (33) of said regulator and its opposite end (102) communicating with pipes (72, 82) for the supply of gas to said devices (7, 8) activating said heads (4, 5).

3. A pressure regulator according to claim 1, characterized in that said single body (3) presents a first service way (13) communicating with said delivery way (35) downstream said annular opening (31) and suited to allow the passage of the adjusting mechanism (41) co-operating with said control head (4) of said main regulator (400) and a second service way (15) communicating with said inlet way (33) upstream said annular opening (31) and suited to allow the passage of the adjusting (51) and intercepting (61) mechanisms co-operating with said control head (5) of said safety regulator (500) and with said unit (6) activating said cut-off valve (600).

4. A pressure regulator according to any of the claims 1 or 3, characterized in that said adjusting and/or intercepting mechanisms consist of:
- a first tubular element (41) arranged in correspondence with said delivery way (35) and belonging to said main regulator (400), co-operating through first mechanical means (42, 43) with said control head (4) of said main regulator (400);
- a second tubular element (51), arranged in correspondence with said inlet way (33), and belonging to said safety regulator (500), co-operating through second mechanical means (52, 53) with said control head (5) of said safety regulator (500);
- a third tubular element (61) arranged in correspondence with said inlet way (33) and belonging to said safety regulator (500), co-operating through third mechanical means (62, 63, 64, 66, 68) with said unit (6) activating said cut-off valve (600), each of said tubular elements presenting at its end a shaped annular rim suited to cooperate with said annular opening (31).

5. A pressure regulator according to claim 4, characterized in that said annular opening (31) is obtained in the annular valve seat (32) applied to the body of the regulator, whereby said annular valve seat (32) is equipped with sealing rings (132) separate and independent from one another, each of them being suited to create a sealing effect against a shaped annular rim of said adjusting and/or intercepting mechanisms (41, 51, 61).

6. A pressure regulator according to claim 4, characterized in that said first tubular element (41) and said second tubular element (51) are arranged opposite to one another in relation to said annular opening (31).

7. A pressure regulator according to claim 4, characterized in that said first mechanical means comprise a first stem (42) which presents one end connected with said first tubular element (41) and its opposite end connected with the control head (4) of said main regulator (400) and a first elastic means (43) suited to make flexible the movement of said first stem (42).

8. A pressure regulator according to claim 7, characterized in that said first elastic means (43) is a spring (43) arranged co-axially on the exterior of said first stem (42).

9. A pressure regulator according to claim 4, characterized in that said second mechanical means comprise a second stem (52) which presents one end connected with said second tubular element (51) and its opposite end connected with the control head (5) of said safety regulator (500) and a second elastic means (53) suited to make flexible the movement of said second stem (52).

10. A pressure regulator according to claim 9, characterized in that said second elastic means is a spring (53) arranged co-axially on the exterior of said second stem (52).

11. A pressure regulator according to claim 4, characterized in that said third mechanical means comprise a third elastic means (63) arranged between said third tubular element (61) and the body (50) of said safety regulator (500), and a contrasting mobile element interfering against said third tubular element (61) and being connected with the unit (6) activating said cut-off valve (600).

12. A pressure regulator according to claim 11, characterized in that said third elastic means is a spring (63) which at one end contrasts against an undercut created by a protruding ring (65) obtained on the exterior lateral surface of said third tubular element (61) and at the opposite end contrasts against the body (50) of said safety regulator (500).

13. A pressure regulator according to claim 11, characterized in that said mobile contrasting element consists of a peg (62) which interferes against a protruding ring (65) obtained on the exterior lateral surface of said third tubular element (61), said peg (62) belonging to a link-rod (64) attached to the end of a pivot pin (66) mechanically connected with the unit (6) activating said cut-off valve (600).

## Patentansprüche

1. Ein Druckregler (1) für Druckgas, mit Anschluß an ein Rohrsystem (2), das unter Druck stehendes Gas liefert, und einen einzelnen Körper (3) umfassend, an dem folgendes mechanisch angeschlossen ist:
- ein Steuerkopf (4) eines Hauptreglers (400) mit einem Haupt-Regelventilmechanismus (41);
- ein Steuerkopf (5) eines Sicherheitsreglers (500) mit einem Sicherheits-Regelventilmechanismus (51);
- ein Paar Vorrichtungen (7, 8), die mit unter Druck stehendem Gas versorgt sind, wobei jede der Vorrichtungen geeignet ist, einen der besagten Köpfe (4, 5) zu aktivieren, an den sie mittels je eines Rohrs (71, 81) angeschlossen ist;
- eine Einheit (6), die ein Abschaltventil (600) aktiviert und einen Absperrungs-Abschaltventilmechanismus (61) umfaßt, dadurch gekennzeichnet, daß die besagten drei Ventilmechanismen (41, 51, 61) voneinander getrennt sind und mit einer einzelnen, ringförmigen Öffnung (31) zusammenwirken, die zu dem besagten einzelnen Körper (3) gehört und die an einem Ende mit einem Weg (33) für den Einlaß von unter hohem Druck stehendem Gas kommunizieren und am anderen Ende mit einem Weg (35) zur Ausgabe desselben Gases auf einem regulierten Druck, wobei die besagten drei Ventilmechanismen koaxial zueinander ausgerichtet sind.

2. Ein Druckregler gemäß Patentanspruch 1, dadurch gekennzeichnet, daß sich zwischen dem besagten Sicherheits-Regelventilmechanismus (51) und dem Absperrungs-Abschaltventilmechanismus (61) eine Führungsmuffe (55) befindet, die zu dem besagten Sicherheitsregler (500) gehört, innerhalb deren Körper eine Längsleitung (100) erzielt ist, die an einem ihrer Enden mit dem besagten Einlaßweg (33) des genannten Reglers kommuniziert und an ihrem anderen Ende (102) mit Rohren (72, 82) für die Zuführung von Gas zu den besagten Vorrichtungen (7, 8), die die genannten Köpfe (4, 5) aktivieren.

3. Ein Druckregler gemäß Patentanspruch 1, dadurch gekennzeichnet, daß der besagte einzelne Körper (3) einen ersten Zusatzweg (13) aufweist, der mit dem besagten Ausgabeweg (35) stromabwärts hinter der besagten ringförmigen Öffnung (31) kommuniziert und geeignet ist, den Durchfluß im Regelmechanismus (41) zu erlauben, der mit dem besagten Steuerkopf (4) des besagten Hauptreglers (400) zusammenwirkt, und einen zweiten Zusatzweg (15), der mit dem Einlaßweg (33) stromaufwärts vor der ringförmigen Öffnung (31) kommuniziert und geeignet ist, den Durchfluß im Regel- (51) und im Abschaltmechanismus ((61) zu erlauben, die mit dem Steuerkopf (5) des Sicherheitsreglers (500) und mit der besagten Einheit (6), die das Abschaltventil (600) aktiviert, zusammenwirken.

4. Ein Druckregler gemäß jeglichem der Patentansprüche 1 oder 3, dadurch gekennzeichnet, daß die Regel- und/oder Abschaltmechanismen aus folgenden Teilen bestehen:
- ein erstes röhrenförmiges Element (41), das in Entsprechung mit dem besagten Ausgabeweg (35) angeordnet ist und zu dem besagten Hauptregler (400) gehört und über erste mechanische Mittel (42, 43) mit dem besagten Steuerkopf (4) des Hauptreglers (400) zusammenwirkt;
- ein zweites röhrenförmiges Element (51), das in Entsprechung mit dem besagten Einlaßweg (33) angeordnet ist und zu dem besagten Sicherheitsregler (500) gehört und über zweite mechanische Mittel (52, 53) mit dem besagten Steuerkopf (5) des Sicherheitsreglers (500) zusammenwirkt;
- ein drittes röhrenförmiges Element (61), das in Entsprechung mit dem besagten Einlaßweg (33) angeordnet ist und zu dem besagten Sicherheitsregler (500) gehört und über dritte mechanische Mittel (62, 63, 64, 66, 68) mit der besagten Einheit (6), die das Abschaltventil (600) aktiviert, zusammenwirkt, wobei jedes der genannten röhrenförmigen Elemente an seinem Ende einen geformten, ringförmigen Rand aufweist, der mit der besagten ringförmigen Öffnung (31) zusammenwirkt.

5. Ein Druckregler gemäß Patentanspruch 4, dadurch gekennzeichnet, daß die besagte ringförmige Öffnung (31) aus dem ringförmigen Ventilsitz (21) gearbeitet ist, der am Körper des Reglers angebracht ist, wobei dieser ringförmige Ventilsitz (21) mit separaten und voneinander unabhängigen Dichtringen (132) versehen ist, wobei jeder von diesen geeignet ist, einen abdichtenden Effekt gegenüber einem geformten, ringförmigen Rand der besagten Regel- und/oder Abschaltmechanismen zu erzeugen.

6. Ein Druckregler gemäß Patentanspruch 4, dadurch gekennzeichnet, daß das besagte erste röhrenförmige Element (41) und das besagte zweite röhrenförmige Element (51) einander gegenüberliegen mit der ringförmigen Öffnung (31) in der Mitte zwischen ihnen.

7. Ein Druckregler gemäß Patentanspruch 4, dadurch gekennzeichnet, daß das besagte erste mechanische Mittel einen ersten Stiel (42) aufweist, der ein mit dem ersten röhrenförmigen Element (41) verbundenes Ende hat und dessen gegenüberliegendes Ende mit dem Steuerkopf (4) des Hauptreglers (400) verbunden ist, sowie ein erstes elastisches Mittel (43), das geeignet ist, die Bewegung des ersten Stiels (42) flexibel zu machen.

8. Ein Druckregler gemäß Patentanspruch 7, dadurch gekennzeichnet, daß das besagte erste elastische Mittel (43) eine Feder (43) ist, die koaxial außen an besagtem ersten Stiel (42) angeordnet ist.

9. Ein Druckregler gemäß Patentanspruch 4, dadurch gekennzeichnet, daß das besagte zweite mechanische Mittel einen zweiten Stiel (52) aufweist, der ein mit dem zweiten röhrenförmigen Element (51) verbundenes Ende hat und dessen gegenüberliegendes Ende mit dem Steuerkopf (5) des Sicherheitsreglers (500) verbunden ist, sowie ein zweites elastisches Mittel (53), das geeignet ist, die Bewegung des zweiten Stiels (52) flexibel zu machen.

10. Ein Druckregler gemäß Patentanspruch 9, dadurch gekennzeichnet, daß das besagte zweite elastische Mittel (53) eine Feder (53) ist, die koaxial außen an besagtem zweiten Stiel (52) angeordnet ist.

11. Ein Druckregler gemäß Patentanspruch 4, dadurch gekennzeichnet, daß das besagte dritte mechanische Mittel ein drittes, elastisches Mittel ((63) umfaßt, das zwischen dem dritten röhrenförmigen Element (61) und dem Körper (50) des Sicherheitsreglers (500) angebracht ist, sowie ein gegenwirkendes, bewegliches Element, das gegen das besagte dritte röhrenförmige Element wirkt und mit der Einheit (6), die das Abschaltventil (600) aktiviert, verbunden ist.

12. Ein Druckregler gemäß Patentanspruch 11, dadurch gekennzeichnet, daß das besagte dritte elastische Mittel eine Feder (63) ist, die an einem Ende gegen einen Unterschnitt wirkt, der an der seitlichen Außenfläche des dritten röhrenförmigen Elements (61) erzielt ist, und am anderen Ende gegen den Körper (50) des Sicherheitsreglers (500) wirkt.

13. Ein Druckregler gemäß Patentanspruch 11, dadurch gekennzeichnet, daß das besagte bewegliche, gegenwirkende Element aus einem Zapfen (62) besteht, der gegen einen vorstehenden Ring (65) wirkt, der aus der seitlichen Außenfläche des dritten röhrenförmigen Elements (61) gearbeitet ist, wobei dieser Zapfen (62) zu einer Anlenkpleuelstange (64) gehört, die am Ende eines Gelenkzapfens (66) befestigt ist, der mechanisch mit der Einheit (6), die das Abschaltventil (600) aktiviert, verbunden ist.

## Revendications

1. Un régulateur de pression (1) pour gaz comprimé relié à un système de tubes (2) distribuant gaz sous pression et comprenant un corps unique (3) auquel les éléments suivants sont reliés mécaniquement:
- une tête de contrôle (4) d'un régulateur principal (400) comprenant un mécanisme principal à soupape de réglage (41) de la ligne principale;
- une tête de contrôle (5) d'un régulateur de sécurité (500) comprenant un mécanisme à soupape de réglage de sécurité (51);
- une paire de dispositifs (7, 8) fournis de gaz sous pression, chacun desdits dispositifs étant indiqué pour activer une desdites têtes (4, 5) auxquelles il est relié au moyen d'un tube correspondant (71, 81);
- une unité (6) activant une soupape de fermeture (600) comprenant un mécanisme à soupape d'arrêt (61), caractérisé en ce que lesdits trois mécanismes à soupape (41; 51; 61) sont séparés entre eux et interagissent avec une ouverture annulaire (31) qui appartient audit corps unique (3) et qui communique, d'une extrémité, avec une voie (33) pour l'admission du gaz à haute pression et, de l'autre extrémité, avec une voie (35) pour distribuer le même gaz à pression réglée, les trois mécanismes à soupape étant coaxiaux l'un par rapport à l'autre.

2. Un régulateur de pression selon la revendication 1, caractérisé en ce que entre ledit mécanisme à soupape de réglage de sécurité (51) et ledit mécanisme d'arrêt (61) il y a un manchon de guidage (55) appartenant audit régulateur de sécurité (500), dans le corps duquel un conduit longitudinal (100) est obtenu, qui présente une des deux extrémités communiquant avec ladite voie d'admission (33) dudit régulateur et l'extrémité opposée (102) communiquant avec des tubes (72, 82) pour le passage du gaz auxdits dispositifs (7, 8) activant lesdites têtes (4, 5).

3. Un régulateur de pression selon la revendication 1, caractérisé en ce que ledit corps unique (3) présente une première voie de service (13) communiquant avec ladite voie de refoulement (35) en aval de ladite ouverture annulaire (31) et indiquée pour permettre le raccordement du mécanisme de réglage (41) interagissant avec ladite tête de contrôle (4) dudit régulateur principal (400) et une deuxième voie de service (15) communiquant avec ladite voie d'admission (33) en amont de ladite ouverture annulaire (31) et indiquée pour permettre le raccordement des mécanismes de réglage (51) et d'arrêt (61) interagissant avec ladite tête de contrôle (5) dudit régulateur de sécurité (500) et avec ladite unité (6) activant ladite soupape de fermeture (600).

4. Un régulateur de pression selon une qulconque des revendications de 1 à 3, caractérisé en ce que lesdits mécanismes de réglage et/ou d'arrêt se composent de:
- un premier élément tubulaire (41) positionné au niveau de ladite voie de refoulement (35) et appartenant audit régulateur principal (400), interagissant à travers de premiers moyens mécaniques (42, 43) avec ladite tête de contrôle (4) dudit régulateur principal (400);
- un deuxième élément tubulaire (51), positionné au niveau de ladite voie d'admission (33), et appartenant audit régulateur de sécurité (500), interagissant à travers de deuxièmes moyens mécaniques (52, 53) avec ladite tête de contrôle (5) dudit régulateur de sécurité (500);
- un troisième élément tubulaire (61) positionné au niveau de ladite voie d'admission (33), et appartenant audit régulateur de sécurité (500), interagissant à travers de troisièmes moyens mécaniques (62, 63, 64, 66, 68) avec ladite unité (6) activant ladite soupape de fermeture (600), chacun desdits éléments tubulaires présentant à son extrémité un rebord annulaire profilé indiqué pour interagir avec ladite ouverture annulaire (31).

5. Un régulateur de pression selon la revendication 4, caractérisé en ce que ladite ouverture annulaire (31) est obtenue dans le logement annulaire de la soupape (32) appliqué au corps du régulateur, où ledit logement annulaire de la soupape (32) est équipé de bagues de fermeture étanche (132) séparées et indépendantes l'une de l'autre, chacune de celles-ci étant indiquée pour assurer l'étanchéité sur le rebord annulaire profilé desdits mécanismes de réglage et/ou d'arrêt (41, 51, 61).

6. Un régulateur de pression selon la revendication 4, caractérisé en ce que ladite ouverture annulaire (31) est positionnée centralement entre ledit premier élément tubulaire (41) et ledit deuxième élément tubulaire (51).

7. Un régulateur de pression selon la revendication 4, caractérisé en ce que lesdits premiers moyens mécaniques comprennent une première tige (42) qui présente une extrémité reliée audit premier élément tubulaire (41) et l'extrémité opposée reliée à la tête de contrôle (4) dudit régulateur principal (400) et un premier moyen élastique (43) indiqué pour rendre flexible le mouvement de ladite première tige (42).

8. Un régulateur de pression selon la revendication 7, caractérisé en ce que ledit premier moyen élastique (43) est un ressort (43) positionné de manière coaxiale sur la partie externe de ladite tige (42).

9. Un régulateur de pression selon la revendication 4, caractérisé en ce que lesdits deuxièmes moyens mécaniques comprennent une deuxième tige (52) qui présente une extrémité reliée audit deuxième élément tubulaire (51) et l'extrémité opposée reliée à la tête de contrôle (5) dudit régulateur de sécurité (500) et un deuxième moyen élastique (53) indiqué pour rendre flexible le mouvement de ladite deuxième tige (52).

10. Un régulateur de pression selon la revendication 9, caractérisé en ce que ledit deuxième moyen élastique est un ressort (53) positionné de manière coaxiale sur la partie externe de la dite deuxième tige (52).

11. Un régulateur de pression selon la revendication 4, caractérisé en ce que lesdits troisièmes moyens mécaniques comprennent un troisième moyen élastique (63) positionné entre ledit troisième élément tubulaire (61) et le corps (50) dudit régulateur de sécurité (500), et un élément mobile de contraste interférant contre ledit troisième élément tubulaire (61) et étant relié à l'unité (6) activant ladite soupape de fermeture (600).

12. Un régulateur de pression selon la revendication 11, caractérisé en ce que ledit troisième moyen élastique est un ressort (63) qui d'une extrémité contraste contre un renfoncement créé par une bague saillante (65) obtenue sur la surface latérale externe dudit troisième élément tubulaire (61) et de l'autre extrémité contraste contre le corps (50) dudit régulateur de sécurité (500).

13. Un régulateur de pression selon la revendication 11, caractérisé en ce que ledit élément mobile de contraste se compose d'une cheville (62) qui interfère contre une bague saillante (65) obtenue sur la surface latérale externe dudit troisième élément tubulaire (61), ladite cheville (62) appartenant à une biellette (64) fixée à l'extrémité d'un pivot de jonction (66) relié de manière mécanique à l'unité (6) activant la dite soupape de fermeture (600).
